(19) Europäisches Patentamt
European Patent Office
Office européen des brevets

(11) **EP 4 622 130 A1**

(12) **EUROPEAN PATENT APPLICATION**
published in accordance with Art. 153(4) EPC

(43) Date of publication:
**24.09.2025 Bulletin 2025/39**

(21) Application number: **23907469.3**

(22) Date of filing: **24.11.2023**

(51) International Patent Classification (IPC):
*H04B 7/06* (2006.01)     *H04W 88/08* (2009.01)
*H04W 92/20* (2009.01)     *H04W 52/36* (2009.01)

(52) Cooperative Patent Classification (CPC):
**H04B 7/06; H04W 52/36; H04W 88/08; H04W 92/20**

(86) International application number:
**PCT/KR2023/019173**

(87) International publication number:
**WO 2024/136183 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 20.12.2022 KR 20220179610
28.02.2023 KR 20230027392
17.03.2023 KR 20230035304

(71) Applicant: **Samsung Electronics Co., Ltd.**
**Suwon-si, Gyeonggi-do 16677 (KR)**

(72) Inventors:
• LIM, Hyoungjin
  Suwon-si, Gyeonggi-do 16677 (KR)
• OH, Jongho
  Suwon-si, Gyeonggi-do 16677 (KR)
• HWANG, Wonjun
  Suwon-si, Gyeonggi-do 16677 (KR)

(74) Representative: **HGF**
**HGF Limited**
**1 City Walk**
**Leeds LS11 9DX (GB)**

(54) **ELECTRONIC DEVICE AND METHOD FOR IDENTIFYING INFORMATION ABOUT BEAMFORMING**

(57) According to one embodiment, a method performed by a distributed unit (DU) comprises an operation of transmitting, to a radio unit (RU), format information for indicating a maximum value of an in-phase value of a beamforming weight and a quadrature value of the beamforming weight. The method comprises an operation of identifying the in-phase value and the quadrature value on the basis of a range determined by the maximum value. The method comprises an operation of transmitting, to the RU, a control-plane (C-plane) message comprising at least one parameter indicative of the in-phase value and the quadrature value.

FIG. 5

**EP 4 622 130 A1**

## Description

### [Technical Field]

The present disclosure relates to a fronthaul interface. More specifically, the present disclosure relates to an electronic device and a method for identifying information about beamforming in a fronthaul interface.

### [Background Art]

As transmission capacity in wireless communication systems increases, a function split that functionally separates base stations is being applied. According to the function split, the base station may be separated into a distributed unit (DU) and a radio unit (RU). A fronthaul interface is defined for communication between the DU and the RU.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

In embodiments, a method performed by a distributed unit (DU) is provided. The method may comprise transmitting, to a radio unit (RU), format information for indicating a maximum value of an in-phase value of a beamforming weight and a quadrature value of the beamforming weight. The method may comprise, based on a range determined according to the maximum value, identifying the in-phase value and the quadrature value. The method may comprise transmitting, to the RU, a control-plane (C-plane) message including at least one parameter indicating the in-phase value and the quadrature value.

In embodiments, a method performed by a radio unit (RU) is provided. The method may comprise receiving, from a distributed unit (DU), format information for indicating a maximum value of an in-phase value of a beamforming weight and a quadrature value of the beamforming weight. The method may comprise receiving, from the DU, a control-plane (C-plane) message including at least one parameter indicating the in-phase value and the quadrature value. The method may comprise, based on the format information and the at least one parameter, identifying the in-phase value and the quadrature value.

In embodiments, an electronic device performed by a distributed unit (DU) is provided. The electronic device may comprise at least one transceiver including a fronthaul transceiver and at least one processor coupled to the at least one transceiver. The at least one processor may be configured to transmit, to a radio unit (RU), format information for indicating a maximum value of an in-phase value of a beamforming weight and a quadrature value of the beamforming weight. The at least one processor may be configured to, based on a range determined according to the maximum value, identify the in-phase value and the quadrature value. The at least one processor may be configured to transmit, to the RU, \a control-plane (C-plane) message including at least one parameter indicating the in-phase value and the quadrature value.

In embodiments, an electronic device performed by a radio unit (RU) is provided. The electronic device may comprise at least one transceiver including a fronthaul transceiver and at least one processor coupled to the at least one transceiver. The at least one processor may be configured to receive, from a distributed unit (DU), format information for indicating a maximum value of an in-phase value of a beamforming weight and a quadrature value of the beamforming weight. The at least one processor may be configured to receive, from the DU, a control-plane (C-plane) message including at least one parameter indicating the in-phase value and the quadrature value. The at least one processor may be configured to, based on the format information and the at least one parameter, identify the in-phase value and the quadrature value.

In embodiments, an electronic device performed by a distributed unit (DU) is provided. The electronic device may comprise memory storing instructions, at least one transceiver including a fronthaul transceiver, and at least one processor. The instructions, when executed by the at least one processor, may cause the DU to transmit, to a radio unit (RU), through the at least one transceiver, format information for indicating a maximum value of an in-phase value of a beamforming weight and a quadrature value of the beamforming weight, based on a range determined according to the maximum value, identify the in-phase value and the quadrature value, and transmit, to the RU, through the at least one transceiver, a control-plane (C-plane) message including at least one parameter indicating the in-phase value and the quadrature value.

In embodiments, an electronic device performed by a radio unit (RU) is provided. The electronic device may comprise memory storing instructions, at least one transceiver including a fronthaul transceiver, and at least one processor. The instructions, when executed by the at least one processor, may cause the DU to receive, from a distributed unit (DU), through the at least one transceiver, format information for indicating a maximum value of an in-phase value of a beamforming weight and a quadrature value of the beamforming weight, receive, from the DU, through the at least one transceiver, a control-plane (C-plane) message including at least one parameter indicating the in-phase value and the quadrature value, and based on the format information and the at least one parameter, identify the in-phase value and the quadrature value.

In embodiments, a non-transitory computer-readable storage medium is provided. The non-transitory computer-readable storage medium may comprise memory storing instructions. The instructions, when executed by at least one processor, may cause a distributed unit (DU) to transmit, to a radio unit (RU), format information for indicating a maximum value of an in-phase value of a beamforming weight and a quadrature value of the beamforming weight, based on a range determined according to the maximum value, identify the in-phase value and the quadrature value, and transmit, to the RU, a control-plane (C-plane) message including at least one parameter indicating the in-phase value and the quadrature value.

In embodiments, a non-transitory computer-readable storage medium is provided. The non-transitory computer-readable storage medium may comprise memory storing instructions. The instructions, when executed by at least one processor, may cause a radio unit (RU) to receive, from a distributed unit (DU), format information for indicating a maximum value of an in-phase value of a beamforming weight and a quadrature value of the beamforming weight, receive, from the DU, a control-plane (C-plane) message including at least one parameter indicating the in-phase value and the quadrature value, and based on the format information and the at least one parameter, identify the in-phase value and the quadrature value.

## [Description of the Drawings]

FIG. 1 illustrates a wireless communication system.
FIG. 2A illustrates a fronthaul interface.
FIG. 2B illustrates a fronthaul interface of an open (O) - radio access network (RAN).
FIG. 3A illustrates a functional configuration of a distributed unit (DU).
FIG. 3B illustrates a functional configuration of a radio unit (RU).
FIG. 4 illustrates an example of a function split between a DU and an RU.
FIG. 5 illustrates an example of operations of a DU and an RU for setting a beamforming weight.
FIG. 6A illustrates an example of functional blocks of a DU and an RU for setting a beamforming weight.
FIG. 6B illustrates an example of operations of a DU and an RU for setting a beamforming weight.
FIG. 7 illustrates an example of a C-plane message including a beamforming weight.
FIG. 8 is a flowchart illustrating an operation of a DU.
FIG. 9 is a flowchart illustrating an operation of an RU.

## [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signal (e.g., signal, information, message, signaling), terms referring to resource (e.g., section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity, and terms referring to components of a device, used in the following description are exemplified for convenience of explanation. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

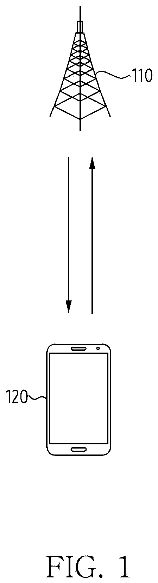

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information related to the beam. The information related to the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

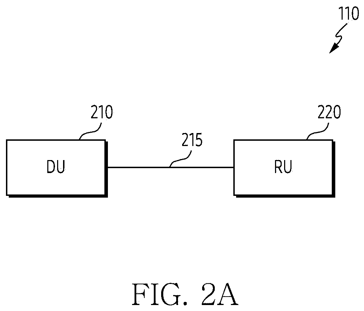

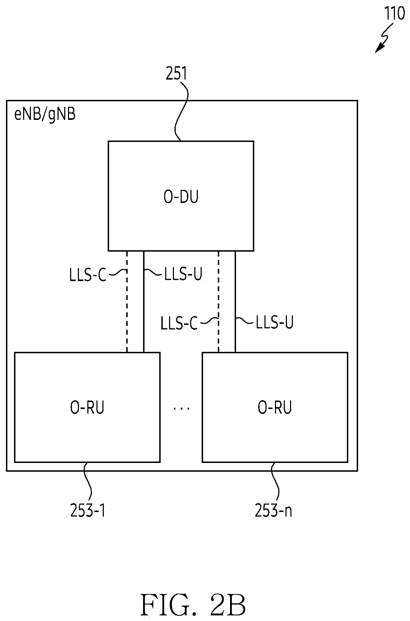

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface according to embodiments. Unlike a backhaul between a base station and a core network, the fronthaul refers to entities between a base station and a radio access network. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

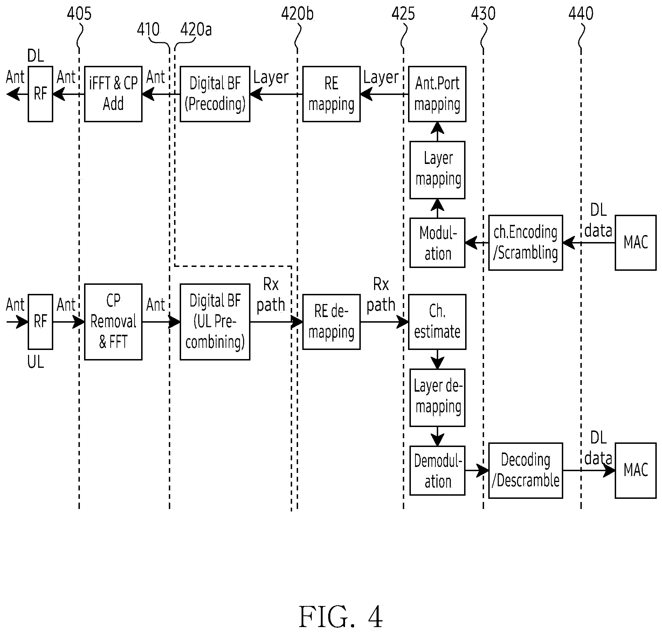

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), CP insertion (CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer function split (i.e., intra-PHY-based function split). The LLS-C between the O-DU 251 and the O-RU 253-1 provides a C-plane through the LLS interface. The LLS-U between the O-DU 251 and the O-RU 253-1 provides a U-plane through the LLS interface.

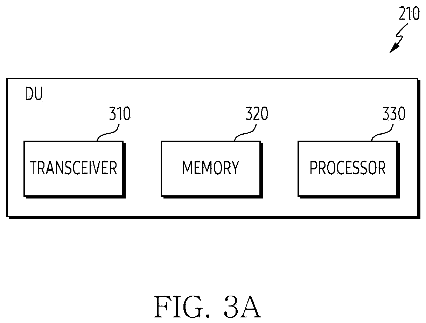

In FIG. 2B, entities of the base station 110 have been described as O-DU and O-RU to describe O-RAN. However, these designations are not to be construed as limiting the embodiments of the present disclosure. In embodiments described with reference to FIGS. 3A to 9, operations of the DU 210 may also be performed by the O-DU 251. A description of the DU 210 may be applied to the O-DU 251. Likewise, in embodiments described with reference to FIGS. 3A to 9, operations of the RU 220 may also be performed by the O-RU 253-1. A description of the RU 220 may be applied to the O-RU 253-1.

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

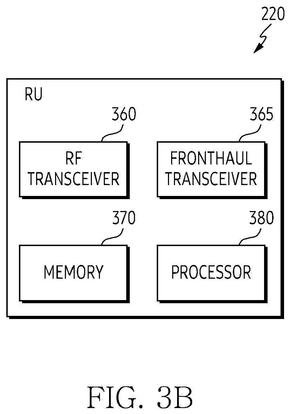

FIG. 3B illustrates a functional configuration of a radio unit (RU) according to embodiments. A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to notify the detection of remote interference. The RF transceiver 460 may transmit a second type of RIM-RS (e.g., RIM-RS type 2 of 3GPP) for notifying the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 320. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce the transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, a first function split in which the RU performs the RF function, and the DU performs the PHY function is substantially such that the PHY function is not implemented within the RU, and, for example, may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, in the present disclosure, unless otherwise specified, the embodiments are described based on a third function split 420a (which may be referred to as category A (CAT-A)) or a fourth function split 420b (which may be referred to as category B (CAT-B)) for performing beamforming processing at the RU. The O-RAN standard distinguishes the type of O-RU according to whether a precoding function is located at the interface of the O-DU or the O-RU interface. An O-RU in which precoding is not performed (i.e., low complexity) may be referred to as a CAT-A O-RU. An O-RU in which precoding is performed may be referred to as a CAT-B O-RU.

Hereinafter, the upper PHY refers to a physical layer processing processed in a DU of a fronthaul interface. For example, the upper PHY may include FEC encoding/decoding, scrambling, modulation/demodulation. Hereinafter, the lower PHY refers to a physical layer processing processed by an RU of a fronthaul interface. For example, the lower PHY may include FFT/iFFT, digital beamforming, and physical random access channel (PRACH) extraction and filtering. However, the above-described criterion does not exclude embodiments through other function splits. A function configuration, signaling, or operation of embodiments described below may be applied not only to the third function split 420a or the fourth function split 420b but also to other function split. According to an embodiment, in the sixth function split 430 (Option 7-3), DU operations, RU operations, and/or signaling between DU-RU to be described later may be applied.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.

2) ecpriReserved (3 bits): This parameter is reserved for further use of eCPRI.

3) ecpriConcatenation (1 bit): This parameter indicates when eCPRI concatenation is in use.

4) ecpriMessage (1 byte): This parameter indicates a type of a service carried by a message type. For example, the parameter indicates an IQ data message, a real-time control data message, or a transport network delay measurement message.

5) ecpriPayload (2 bytes): This parameter indicates a byte size of a payload portion of the eCPRI message.

6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.

7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier 'BandSector_ID', a component carrier identifier 'CC_ID', a spatial stream identifier 'RU_Port_ID', and a distributed unit identifier 'DU_Port_ID'. The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.

2) BandSector_ID: Aggregated cell identifier (identification of band and sector supported by O-RU).

3) CC_ID: CC_ID identifies carrier components supported by the O-RU.

4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes by Section Type are as follows.

    1) sectionType=0: Used to indicate resource blocks or symbols not used in the DL or the UL.

    2) sectionType=1: Used for most DL/UL wireless channels. Herein, "most" refers to channels that do not require time or frequency offsets such as those required for mixed numerology channels.

    3) sectionType=2: reserved for further use

    4) sectionType=3: PRACH and mixed-numerology channels. Channels that require time or frequency offsets or differ from the nominal SCS value(s).

    5) sectionType=4: reserved for further use

    6) sectionType=5: UE scheduling information. Transmits UE scheduling information so that the RU can perform real-time BF weight calculation (O-RAN optional BF method)

    7) sectionType=6: Transmit UE-specific channel information. Periodically transmits UE channel information so that the RU can perform real-time BF weight calculation (O-RAN optional BF method)

    8) sectionType=7: Used for licensed assisted access (LAA) support

    9) sectionType=8: Used for ACK/NACK Feedback. To provide ACK/NACK feedback on section descriptions of C-plane messages from the RU to the DU.

In the following specification, a technical feature for determining a range for identifying a value of a beamforming weight and a technical feature for providing (or transmitting) a value of a beamforming weight identified based on the range a RU (e.g., the RU 220 of FIG. 2) by a DU (e.g., the DU 210 of FIG. 2) may be described.

In a case that a plurality of UEs are scheduled in a slot, beamforming weights for the plurality of UEs may be used to apply precoding to data to be transmitted to the plurality of UEs. As beamforming weights are used, robustness of transmission of data to be transmitted to the plurality of UEs may be improved. For example, beamforming weights may be identified based on a minimum mean square error (MMSE) method. As an example, beamforming weights may be identified based on the following equation according to the MMSE method.

[Equation 1]

$$\mathbf{W} = \mathbf{H}^H(\mathbf{H}\mathbf{H}^H + \mathbf{R_{nn}})^{-1}$$

In Equation 1, W indicates a beamforming weight matrix. H indicates a channel. $\mathbf{X}^H$ operation indicates a conjugate complex transpose of X. $\mathbf{R_{uu}}$ indicates a covariance matrix of noise and interference of the channel.

The beamforming weights identified according to the equation 1 may have a large deviation according to antenna, resource block (RB), or layer. Therefore, the electronic device (e.g., the DU 210) may perform normalization of beamforming weights to correct the deviation of the beamforming weights according to antenna, RB, or layer.

For example, the electronic device may perform normalization of beamforming weights according to the following equation to reduce the deviation of the beamforming weights according to RB and/or layer.

[Equation 2]

$$w'_{r,l} = \frac{w_{r,l}}{\sqrt{\sum_{t=0}^{nT-1}\|W(r,t,l)\|^2}}$$

Referring to Equation 2, $w_{r,l}$ means a beamforming weight before the normalization is performed. $w'_{r,l}$ means a beamforming weight after the normalization is performed. r is an index indicating RB. l is an index indicating a layer. t is an index indicating antenna. $W(r,t,l)$ means a beamforming weight according to RB, layer, and antenna. Based on obtaining beamforming weights according to Equation 2, power of a signal transmitted for each RB and/or layer may be set to be the same or similar.

For example, the electronic device may perform the normalization of beamforming weights according to the following equation to reduce a deviation of beamforming weights according to antenna.

[Equation 3]

$$W' = \frac{W}{\sqrt{\sum_{r=0}^{N_{RB}-1}\sum_{l=0}^{N_{Layer}-1}|W(r,t,l)|^2}},$$

Referring to Equation 3, **W** means a beamforming weight before the normalization is performed. **W'** means a beamforming weight after the normalization is performed. r is an index indicating RB. l is an index indicating layer. t is an index indicating antenna. means a beamforming weight according to RB, layer, and antenna. Based on obtaining beamforming weights according to Equation 3, power of a signal transmitted for each antenna may be set to be the same or similar.

As the normalization of the beamforming weights is performed based on the above-described equation 2 and/or equation 3, the power of each beamforming weight may be changed. The electronic device (e.g., the DU 210) may compensate for the loss and/or gain of the signal size due to beamforming, based on performing the normalization of the beamforming weights.

In an interface according to the O-RAN standard, an RU (e.g., the RU 220 of FIG. 2) may perform beamforming. The RU may perform beamforming based on a beamforming weight. For example, the beamforming weight may be pre-defined in a DU (e.g., the DU 210 of FIG. 2) and/or the RU. In a case that the beamforming weight is pre-defined in the DU, the DU may provide the beamforming weight to the RU. In a case that the beamforming weight is pre-defined in the RU, the RU may perform beamforming based on the beamforming weight without receiving the beamforming weight from the DU. For example, the DU may generate the beamforming weight. As an example, the DU may generate a beamforming weight based on channel information. The DU may transmit (or provide) the generated beamforming weight to the RU. For example, the RU may generate (or obtain) a beamforming weight. For example, the RU may generate (or obtain) the beamforming weight based on channel information.

According to an embodiment, a range of power size of the beamforming weights generated (or obtained) according to the above-described example may be set to 1.0 or less, as in the following equation. For example, the generated (or obtained) beamforming weights may be set to a power less than or equal to 1.0.

[Equation 4]

$$|w|^2 \leq 1.0$$

Referring to Equation 4, a size of each beamforming weight may be set to 1.0 or less.

In a case of transmitting (or transferring) a beamforming weight from DU to RU, weight information may be transmitted (or transferred) as a fixed point value having a bit width indicated by 'bfwIqWidth' parameter determined through a management-plane (M-plane) or a control-plane (C-plane). A specific example of the 'bfwIqWidth' parameter will be described later.

In order to represent a beamforming weight through a bit width according to the 'bfwIqWidth' parameter, an integer part and a fractional part should be defined. However, in the O-RAN standard, the integer part and the fractional part for representing a beamforming weight are not defined.

According to an embodiment, since power for a beamforming weight (or a size of the beamforming weight) may be set to 1.0 or less, a most significant bit among bits for representing the beamforming weight may be set as a sign bit, and all remaining bits may be set as fractional bits. In a case that the most significant bit among the bits representing the beamforming weight is set as a sign bit and all the remaining bits are set as fractional bits, an in-phase value (or I) and a quadrature value (or Q) of a beamforming weight transmitted through a fronthaul may be set to be greater than or equal to -1.0 and less than 1.0, respectively. A range of the in-phase value (or, I) and the quadrature value (or, Q) of the weight may be set as shown in the following equation.

[Equation 5]

$$-1.0 \leq (\text{I or Q}) \leq \frac{2^{bfwIqWidth-1} - 1}{2^{bfwIqWidth-1}}$$

Referring to Equation 5, bfwIqWidth indicates the 'bfwIqWidth' parameter value. I indicates an in-phase value (or I component) of the beamforming weight. Q indicates a quadrature value (or Q component) of the beamforming weight.

According to the above-described embodiment, in a case that a normalization (e.g., normalization for each layer or normalization for each antenna) is performed so that the power of all beamforming weights is set to 1.0 or less, the power of all beamforming weights may be reduced to 1.0 or less. As the power of all beamforming weights is reduced to 1.0 or less, the beamforming weights may act as a loss for the size of the beamforming signal. Therefore, a problem may occur in which output power of a signal does not reach a maximum value.

Therefore, in the following specification, a technical feature for relaxing (or removing) an upper limit (e.g., less than 1.0) of a power size of each beamforming weight may be described. In a case that the upper limit of the power size of the beamforming weights is relaxed, the power of the beamforming weight may be increased. When the beamforming weight is normalized, the power of the beamforming weight may be increased, and a loss that occurs when performing beamforming may be compensated. Therefore, after beamforming is applied, the output power of the signal may reach the maximum value.

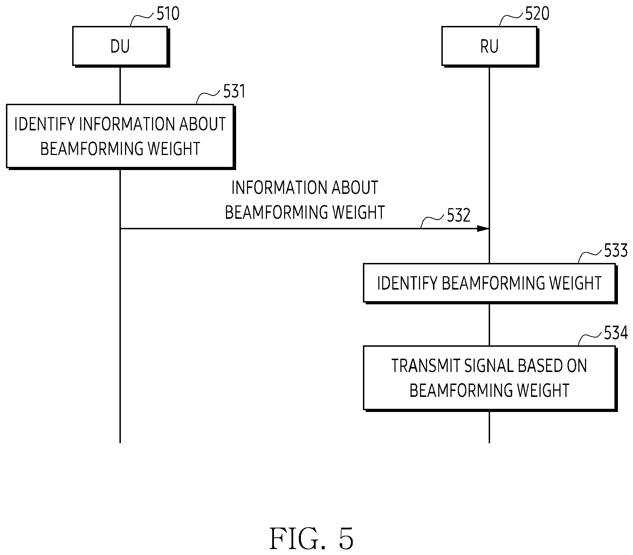

FIG. 5 illustrates an example of an operation of a DU and an RU for setting a beamforming weight. DU 510 illustrated in FIG. 5 may correspond to the DU 210 of FIG. 3A. RU 520 illustrated in FIG. 5 may correspond to the RU 220 of FIG. 3B.

Referring to FIG. 5, in operation 531, the DU 510 may identify information about a beamforming weight. For example, the DU 510 may identify (or obtain) a beamforming weight stored in memory of the DU 510. For example, the DU 510 may identify (or obtain) a beamforming weight based on a M-plane exchange procedure with the RU 520. As an example, the DU 510 may identify information about a beamforming weight based on capability information about a beamforming of the RU 520.

For example, the information about the beamforming weight may include format information for indicating a maximum value of an in-phase value of the beamforming weight and/or a quadrature value of the beamforming weight. For example, the information about the beamforming weight may include information about the maximum value of the in-phase value of the beamforming weight and/or the quadrature value of the beamforming weight. For example, the information about the beamforming weight may include the in-phase value of the beamforming weight and/or the quadrature value of the beamforming weight.

For example, the DU 510 may identify the maximum value of the in-phase value of the beamforming weight and/or the quadrature value of the beamforming weight. As an example, the maximum value of the in-phase value of the beamforming weight and/or the quadrature value of the beamforming weight may be set to be greater than 1.0. The DU 510 may identify the in-phase value of the beamforming weight and/or the quadrature value of the beamforming weight, based on the maximum value of the in-phase value of the beamforming weight and/or the quadrature value of the beamforming weight. Since the maximum value of the in-phase value of the beamforming weight and/or the quadrature value of the beamforming weight is set to be greater than 1.0, the in-phase value of the beamforming weight and/or the quadrature value of the beamforming weight may also be set to be greater than 1.0.

In operation 532, the DU 510 may transmit information about the beamforming weight to the RU 520. The RU 520 may receive information about the beamforming weight from the DU 510. For example, the DU 510 may transmit the information about the beamforming weight through an M-plane message and/or a C-plane message.

In operation 533, the RU 520 may identify a beamforming weight. For example, the RU 520 may identify the beamforming weight, based on information about the beamforming weight.

In operation 534, the RU 520 may transmit a signal based on the beamforming weight. The RU 520 may perform precoding, based on the beamforming weight. The RU 520 may transmit a signal obtained based on the precoding to at least one terminal related to the RU 520.

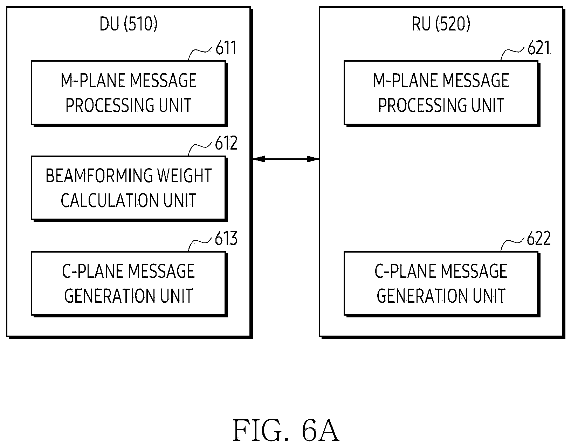

FIG. 6A illustrates an example of functional blocks of a DU and an RU for setting a beamforming weight.

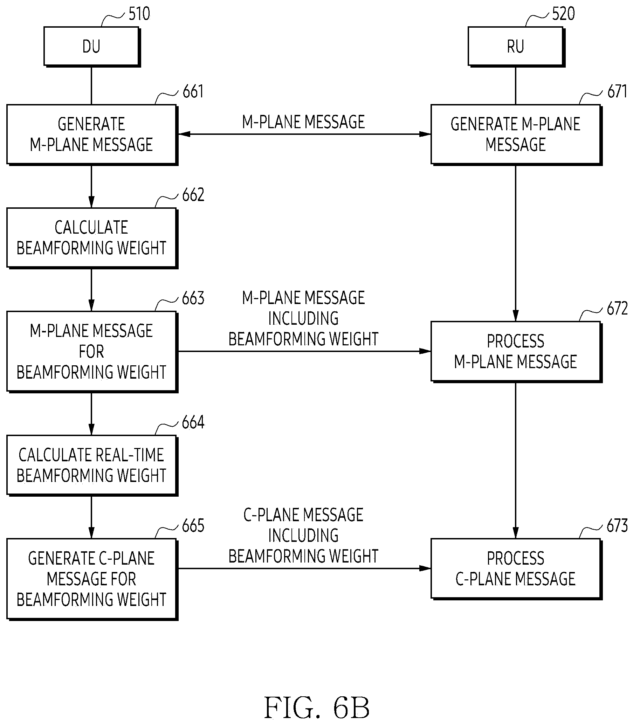

FIG. 6B illustrates an example of an operation of a DU and an RU for setting a beamforming weight.

Hereinafter, the terms '...unit' and '...er' used below refer to a unit processing at least one function or operation, which may be implemented by hardware or software, or a combination of hardware and software.

Referring to FIG. 6A, DU 510 may include a M-plane message processing unit 611, a beamforming weight calculation unit 612, and/or a C-plane message generation unit 613. The M-plane message processing unit 611, the beamforming weight calculation unit 612, and/or the C-plane message generation unit 613 may be included in a processor (e.g., the processor 330 of FIG. 3A) of the DU 510. At least some or all of functions of the M-plane message processing unit 611, the beamforming weight calculation unit 612, and/or the C-plane message generation unit 613 may be performed in a processor (e.g., the processor 330 of FIG. 3A) of the DU 510.

For example, the M-plane message processing unit 611 may be used to generate and process an M-plane message including capability information about a beamforming weight. The capability information may include information about processing capability of beamforming weight in which a maximum values of an in-phase value and a quadrature value is greater than 1.0. According to an embodiment, the M-plane message processing unit 611 may also be used to generate an M-plane message including information about beamforming weight.

For example, the beamforming weight calculation unit 612 may be used to calculate a beamforming weight to be transmitted to the RU 520. The beamforming weight calculation unit 612 may be used to calculate a beamforming weight in which the maximum value of the in-phase value and the quadrature value is greater than 1.0. The beamforming weight calculation unit 612 may also be used to calculate a beamforming weight in which the maximum value of the in-phase value and the quadrature value is less than 1.0.

For example, the C-plane message generation unit 613 may be used to generate a C-plane message including information about beamforming weight. The C-plane message generation unit 613 may be used to generate a C-plane message including a beamforming weight in which the maximum value of the in-phase value and the quadrature value is greater than 1.0.

The RU 520 may include an M-plane message processing unit 621 and/or a C-plane message processing unit 622. The M-plane message processing unit 621 and/or the C-plane message processing unit 622 may be included in a processor (e.g., the processor 380 of FIG. 3B) of the RU 520. At least some or all of functions of the M-plane message processing unit 621 and/or the C-plane message processing unit 622 may be performed in a processor (e.g., the processor 380 of FIG. 3B) of the RU 520.

For example, the M-plane message processing unit 621 may be used to generate and process an M-plane message including capability information regarding beamforming weight. The capability information may include information regarding the processing capability of beamforming weight in which the maximum values of the in-phase value and the quadrature value is greater than 1.0.

For example, the C-plane message processing unit 622 may be used to process a C-plane message including information about beamforming weight. The RU 520 may receive a C-plane message from the DU 510 and process the received C-plane message using the C-plane message processing unit 622. For example, the C-plane message processing unit 622 may be used to process a C-plane message including a beamforming weight in which the maximum value of the in-phase value and the quadrature value is greater than 1.0.

Referring to FIG. 5B, in operation 661, the DU 510 may generate an M-plane message by using the M-plane message processing unit 611. The DU 510 may exchange the M-plane messages with the RU 520 by using the M-plane message processing unit 611. For example, the DU 510 may process the M-plane message received from the RU 520 by using the M-plane message processing unit 611. For example, the M-plane message may include capability information regarding beamforming weight. The capability information may include information regarding the processing capability of beamforming weight in which the maximum value of the in-phase value and the quadrature value is greater than 1.0.

In operation 671, the RU 520 may generate an M-plane message by using the M-plane message processing unit 621. The RU 520 may exchange the M-plane messages with the DU 510 by using the M-plane message processing unit 621. For example, the RU 520 may process the M-plane message received from the DU 510 by using the M-plane message processing unit 621. For example, the M-plane message may include capability information regarding beamforming weight.

In operation 662, the DU 510 may calculate a beamforming weight by using the beamforming weight calculation unit 612. For example, the DU 510 may identify a maximum value of an in-phase value of the beamforming weight and/or a quadrature value of beamforming weight, based on exchanging M-plane messages with the RU 520. The DU 510 may identify the in-phase value of the beamforming weight and/or the quadrature value of the beamforming weight, based on the identified maximum value.

In operation 663, the DU 510 may generate an M-plane message for beamforming weight by using the M-plane message processing unit 611. For example, the DU 510 may generate an M-plane message including the in-phase value of the beamforming weight and/or the quadrature value of the beamforming weight identified through operation 662. The DU 510 may transmit the M-plane message including the in-phase value of the beamforming weight and/or the quadrature value of the beamforming weight to the RU 520.

In operation 672, the RU 520 may process the M-plane message received from the DU 510 using the M-plane message processing unit 621. The RU 520 may identify the in-phase value of the beamforming weight and/or the quadrature value of the beamforming weight included in the M-plane message.

In operation 664, the DU 510 may calculate a real-time beamforming weight by using beamforming the weight calculation unit 612. For example, the DU 510 may identify the maximum value of the in-phase value of the beamforming weight and/or the quadrature value of the beamforming weight, based on exchanging the M-plane messages with the RU 520. The DU 510 may identify the in-phase value of the beamforming weight and/or the quadrature value of the beamforming weight in real-time, based on the identified maximum value. The DU 510 may identify the in-phase value of the beamforming weight and/or the quadrature value of the beamforming weight in real-time, based on a current channel state.

In operation 665, the DU 510 may generate a C-plane message for beamforming weight by using the C-plane message generation unit 613. For example, the DU 510 may generate a C-plane message including the in-phase value of the beamforming weight and/or the quadrature value of the beamforming weight, identified through operation 664. The DU 510 may transmit the C-plane message including the in-phase value of the beamforming weight and/or the quadrature value of the beamforming weight to the RU 520.

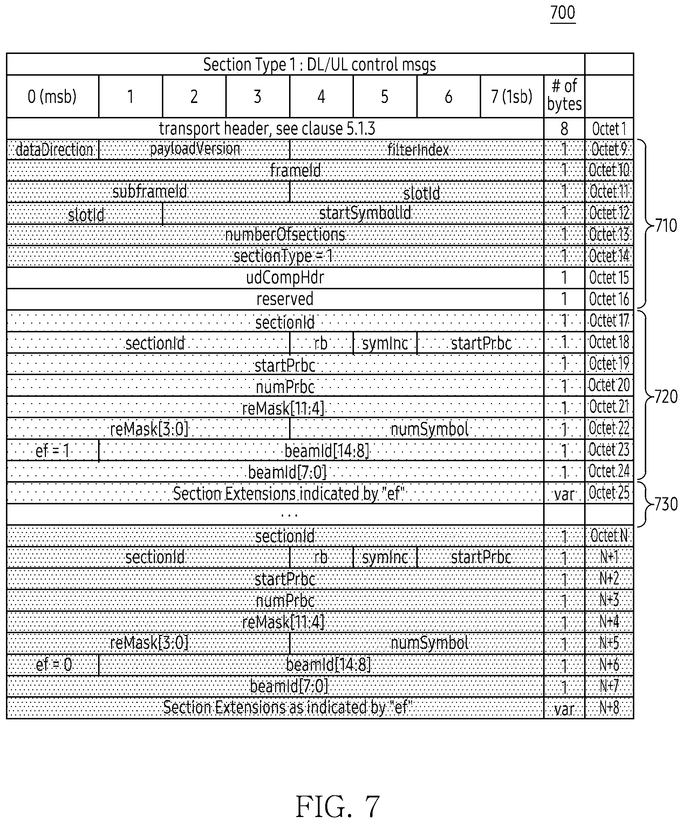

In operation 673, the RU 520 may process the C-plane message received from the DU 510 by using the C-plane message processing unit 622. The RU 520 may identify the in-phase value of the beamforming weight and/or the quadrature value of the beamforming weight, included in the C-plane message. The C-plane message including the beamforming weight will be described later in FIG. 7.

According to an embodiment, the DU 510 may transmit a beamforming weight to the RU 520 through at least one of the M-plane message and the C-plane message. For example, the beamforming weight included in the M-plane message may be pre-defined. For example, the beamforming weight included in the C-plane message may be identified based on a real-time channel state.

According to an embodiment, the RU 520 may operate in a dynamic beamforming control mode. In the dynamic beamforming control mode, the DU 510 may update a table (e.g., lookup table) on beamforming stored in the RU 520 by using the C-plane message. For example, the table on beamforming may include information about beamforming weight.

FIG. 7 illustrates an example of a C-plane message including a beamforming weight. A format of a C-plane message for transmitting information (or beamforming weight) about the beamforming weight may be set to one of section types 1, 3, and 5. For convenience of description, an example in which the beamforming weight is included in a C-plane message 700 set in a format of a section type 1 will be described below, but is not limited thereto.

Referring to FIG. 7, the C-plane message 700 may include a transport header (e.g., eCPRI header or IEEE 1914.3) information, common header information 710, section information 720, and section extension information 730. The transport header may include 'ecpriVersion', 'ecpriReserved, 'ecpriConcatenation', 'ecpriMessage', 'ecpriPayload', 'ecpriRtcid/ecpriPcid', and 'ecpriSeqid', as described above.

The common header information 710 may include 'dataDirection' indicating a data transmission direction of a base station (e.g., gNB), 'payloadVersion' indicating a valid payload protocol version of IEs in an application layer, and 'filterindex' indicating an index for a channel filter between IQ data and an air interface, which is to be used in both DL and UL.

The common header information 710 may include information indicating a location of a time resource to which a message is applicable. The location of the time resource may be represented by a frame, a subframe, a slot, or a symbol. The common header information 910 may include 'frameId' indicating a frame number, 'subframeId' indicating a subframe number, 'slotId' indicating a slot number, and 'startSymbId' indicating a symbol number. The frame is determined based on a 256 modulo operation. The subframe has a unit of 1ms included in a frame of 10ms. The slot number is numbered within the subframe, and a maximum size may be 1, 2, 4, 8, or 16 according to the numerology.

The common header information 710 may include 'numberOfsections' indicating the number of data sections included in the C-plane message. The common header information 710 may include 'sectionType' determining a characteristic of C-plane data. According to an embodiment, the 'sectionType' of the common header information 710 may point to 1. However, the section type pointing to 1 is merely an embodiment, and does not mean that the section extension information 730 according to the embodiments of the present disclosure may not be applied to other section types (2, 3, 4, ...).

The section information 720, which is information for each layer, may include information about a resource allocated in a slot (e.g., 14 symbols). In the C-plane and U-plane, a section may mean an area where resources are allocated. For example, one section may represent a resource allocation area for N RBs in a frequency domain (e.g., N is from 1 to 273 according to a current NR standard) and M symbols in a time domain (e.g., M is from 1 to 14 according to a current NR standard), in a resource grid represented as a time-frequency resource.

The section information 720 may include 'sectionId' which means a section identifier. The section information 720 may include 'rb' which indicates whether every RB is used or every other RB is used, 'symInc' indicating a symbol number increment command, 'startPrbc' for indicating a start PRB number of a data section description, 'numPrbc' for indicating the number of consecutive PRBs per data section description, 'reMask' defining an RE mask within the PRB, 'numSymbol' defining the number of physical random access channel (PRACH) repetitions or the number of symbols to which section control is applied, 'ef' for indicating an extension flag, and 'beamId' defining a beam pattern to be applied to U-plane data. For example, as a value of 'ef' is set to 1, the section extension information 730 may be included in the C-plane message 700.

Although not illustrated, the section extension information 730 may include 'extType', which provides an extension type providing additional parameters. The section extension information 730 may include 'ef, which indicates whether there is another extension present or whether a current extension field is a last extension. The section extension information 930 may include 'extLen', which provides a length of the section extension in 32-bit (or 4-byte) words.

For example, the beamforming weight may be included in the section extension information 730. An extension type of the section extension information 730 including the beamforming weight may be set to one of 1, 11, and 19.

For example, the section extension type 1 may be configured as shown in Table 1.

[Table 1]

| 0 (msb) | 1 | 2 | 3 | 4 | 5 | 6 | 7 (lsb) | # of bytes | |
|---|---|---|---|---|---|---|---|---|---|
| ef | extType = 0x1 | | | | | | | 1 | Octet N |
| extLen | | | | | | | | 1 | Octet N+1 |
| bfwCompHdr | | | | | | | | 1 | Octet N+2 |
| bfwCompParam | | | | | | | | var | Octet N+3 |
| bfwI (for TRX 0) | | | | | | | | var | |
| bfwQ (for TRX0) | | | | | | | | var | |
| remaining beamforming weights bfwI and bfwQ up to K TRXs | | | | | | | | var | |
| zero pad to 4-byte boundary | | | | | | | | var | |

For example, a section extension type 11 may be configured as shown in Table 2.

[Table 2]

| 0 (msb) | 1 | 2 | 3 | 4 | 5 | 6 | 7 (lsb) | # of bytes | |
|---|---|---|---|---|---|---|---|---|---|
| ef | extType = 0x0B | | | | | | | 1 | Octet N |
| extLen[15:0] | | | | | | | | 2 | Octet N+1 |
| disableBFWs | RAD | reserved (6 bits) | | | | | | 1 | Octet N+3 |
| numBundPrb[7:0] | | | | | | | | 1 | Octet N+4 |
| bfwCompHdr[7:0] | | | | | | | | 1 | Octet N+5 |
| bfwCompParam (for PRB bundle 0) | | | | | | | | var | |
| reserved | beamId[14:8] (for PRB bundle 0) | | | | | | | 1 | |
| beamId[7:0] (for PRB bundle 0) | | | | | | | | 1 | |
| bfwI (for TRX 0 and PRB bundle 0) | | | | | | | | var | |
| bfwQ (for TRX0 and PRB bundle 0) | | | | | | | | var | |
| remaining beamforming weights bfwI and bfwQ up to L TRXs and PRB bundle 0 | | | | | | | | var | |
| bfwCompParam (for PRB bundle 1) | | | | | | | | var | |
| reserved | beamId[14:8] (for PRB bundle 1) | | | | | | | 1 | |
| beamId[7:0] (for PRB bundle 1) | | | | | | | | 1 | |
| bfwI (for TRX 0 and PRB bundle 1) | | | | | | | | var | |
| bfwQ (for TRX0 and PRB bundle 1) | | | | | | | | var | |
| remaining beamforming weights bfwI and bfwQ up to L TRXs and PRB bundle 1 | | | | | | | | var | |
| ... | | | | | | | | | |
| bfwCompParam (for last PRB bundle) | | | | | | | | var | |
| reserved | beamId[14:8] (for last PRB bundle) | | | | | | | 1 | |
| beamId[7:0] (for last PRB bundle) | | | | | | | | 1 | |
| bfwI (for TRX 0 and last PRB bundle) | | | | | | | | var | |
| bfwQ (for TRX0 and last PRB bundle) | | | | | | | | var | |
| remaining beamforming weights bfwI and bfwQ up to L TRXs and last PRB bundle | | | | | | | | var | |
| zero pad to 4-byte boundary | | | | | | | | var | |

For example, a section extension type 19 may be configured as shown in Table 3.

[Table 3]

| 0 (msb) | 1 | 2 | 3 | 4 | 5 | 6 | 7 (lsb) | # of bytes | |
|---|---|---|---|---|---|---|---|---|---|
| ef | | extType = 0x13 | | | | | | 1 | Octet N |
| extLen[15:0] | | | | | | | | 2 | N+1 |
| disableBFWs | repetition | numPortc[5:0] | | | | | | 1 | N+3 |
| priority | | symbolMask[13:8] | | | | | | 1 | N+4 |
| symbolMask[7:0] | | | | | | | | 1 | N+5 |
| bfwCompHdr | | | | | | | | var | |
| reserved | | portReMask[11:8] (for port 1) | | | | | | 1 | |
| portReMask[7:0] (for port 1) | | | | | | | | 1 | |
| reserved | | portSymbolMask[13:8] (for port 1) | | | | | | 1 | |
| portSymbolMask[7:0] (for port 1) | | | | | | | | 1 | |
| reserved | | beamID[14:8] (for port 1) | | | | | | 1 | |
| beamID[7:0] (for port 1) | | | | | | | | 1 | |
| bfwCompParam (for port 1) | | | | | | | | var | |
| bfwI (for port 1 and TRX 0) | | | | | | | | var | |
| bfwQ (for port 1 and TRX 0) | | | | | | | | var | |
| remaining beamforming weights bfwI and bfwQ up to L TRXs | | | | | | | | var | |
| --- | | | | | | | | | |
| reserved | | portReMask[11:8] (for last port) | | | | | | 1 | |
| portReMask[7:0] (for last port) | | | | | | | | 1 | |
| reserved | | portSymbolMask[13:8] (for last port) | | | | | | 1 | |
| portSymbolMask[7:0] (for last port) | | | | | | | | 1 | |
| reserved | | beamID[14:8] (for last port) | | | | | | 1 | |
| beamID[7:0] (for last port) | | | | | | | | 1 | |
| bfwCompParam (for last port) | | | | | | | | var | |
| bfwI (for last port and TRX 0) | | | | | | | | var | |
| bfwQ (for last port and TRX 0) | | | | | | | | var | |
| remaining beamforming weights bfwI and bfwQ up to L TRXs | | | | | | | | var | |
| Zero pad to 4-byte boundary | | | | | | | | var | |

Referring to Tables 1 to 3, a section extension type 1, a section extension type 11, and a section extension type 19 may include 'bfwCompHdr'. 'bfwCompHdr' may be configured as shown in Table 4 below.

[Table 4]

| 0 (msb) | 1 | 2 | 3 | 4 | 5 | 6 | 7 (lsb) | Number of Octets |
|---|---|---|---|---|---|---|---|---|
| bfwIqWidth | | | | bfwCompMeth | | | | 1 |

Referring to Table 4, 'bfwCompHdr' may include 'bfwIqWidth' for indicating a bitwidth of the beamforming weight and 'bfwCompMeth' for indicating compression information of the beamforming weight.

For example, 'bfwIqWidth' indicates a bit width of each of an in-phase (I) component (e.g., 'bfwI' in Tables 1 to 3) and a quadrature-phase (Q) component (e.g., 'bfwQ' in Tables 1 to 3). For example, 'bfwIqWidth' may be 4-bit (0000-1111b). As an example, in a case that 'bfwIqWidth' is set to 0000b, the I component and the Q component may be configured with 16 bits (or, 16 bits wide), respectively. As an example, in a case that 'bfwIqWidth' is set to 0001b, the I component and the Q component may be configured with 1 bit (or, 1 bit wide), respectively. As an example, in a case that 'bfwIqWidth' is set to 1100b, the I component and Q component may be configured with 12 bits (or, 12 bits wide), respectively. For example, in a case that 'bfwIqWidth' is set to 1111b, the I component and Q component may be configured with 15 bits (or, 15 bits wide), respectively.

Hereinafter, a technical feature for distinguishing an integer part and a fractional part of the beamforming weight within a bitwidth indicated by 'bfwIqWidth' may be described. In addition, a technical feature for setting a maximum value of power (or size) of the beamforming weight generated in the DU 510 and/or the RU 520 to be greater than 1.0, or for setting the maximum value of the power (or size) of the beamforming weight to a specified value may be described. In the above-described embodiment, an example in which the maximum value of the power (or size) of the beamforming weight is set to be less than or equal to 1.0 has been described, but in the embodiment described below, the maximum value of the power (or size) of the beamforming weight may be set to be greater than 1.0 or to a specified value.

In a case that a maximum value of an in-phase value or a quadrature value of a beamforming weight transmitted (or transferred) through the fronthaul is not 1.0, a range of the power of the beamforming weights may be set as shown in Equation 6.

[Equation 6]

$$|w|^2 \leq A$$

Referring to Equation 6, a size of each beamforming weight may be set to be less than or equal to $\sqrt{A}$.

According to an embodiment, an A value may be set to one of various values. For example, the DU 510 and/or the RU 520 may determine the A value. For example, the DU 510 may transmit the A value to the RU 520 via a parameter. For example, the RU 520 may transmit the A value to the DU 510 via a parameter. For example, the DU 510 may transmit a parameter for obtaining the A value to the RU 520. The RU 520 may obtain (or derive) the A value, based on the received parameter. For example, the RU 520 may transmit, to the DU 510, a parameter for obtaining the A value. The DU 510 may obtain (or derive) the A value based on the received parameter. The parameters of the above-described examples may be transmitted via an M-plane message and/or a C-plane message.

When information on the above-described A value is transmitted, the DU 510 (or the RU 520) may transmit the A value as is to the RU 520 (or the DU 510), or may transmit a bit scale value for indicating the A value. Hereinafter, an example in which the A value is transmitted as is will be described first, and then an example in which the bit scale value for indicating the A value is transmitted will be described.

According to an embodiment, a parameter including (or indicating) a value for limiting the power of the beamforming weight (i.e., the A value) may be transmitted via an M-plane message and/or a C-plane message. For example, the DU 510 may transmit the parameter to the RU 520 via an M-plane message. For example, the DU 510 may transmit the parameter to the RU 520 via a C-plane message. For example, the parameter may be included in section extension information (e.g., Section Extension) of the C-plane message. For example, the parameter may be included in section information (e.g., Section) of the C-plane message.

For example, a value for limiting the power of the beamforming weight may be set using 'maximum_weight_level'. 'maximum_weight_level' may indicate a maximum power level that the beamforming weight can have.

For example, 'maximum_weight_level', which is a value for limiting the power of the beamforming weight, may be set based on a linear scale. A range of a size of the beamforming weight represented as 'maximum_weight_level' may be set as in the following equation.

[Equation 7]

$$|w|^2 \leq \text{maximum\_weight\_level}$$

As an example, 'maximum_weight_level', which is a value for limiting the power of the beamforming weight, may be set based on a decibel-scale (dB-scale). A range of a size of the beamforming weight represented as 'maximum_weight_level' may be set as in the following equation.

[Equation 8]

$$|w|^2 \leq 10^{\frac{\text{maximum\_weight\_level}}{10}}$$

The DU 510 (or the RU 520) may generate (or identify) an in-phase value (or I-component) and a quadrature value (or Q-component) of the beamforming weight based on a value for limiting the power of the beamforming weight (i.e., A) through the above-described condition, and transmit the in-phase value and the quadrature value. A range of the in-phase value and the quadrature value of the beamforming weight may be set as in the following equation.

[Equation 9]

$$-\sqrt{A} \le (I \text{ or } Q) < \sqrt{A},$$

$$\text{where A} = \text{maximum\_weight\_level (linear scale) or } 10^{\frac{\text{maximum\_weight\_level}}{10}} (dB - scale)$$

Referring to Equation 9, the A value indicates a value for limiting the power of the beamforming weight. I indicates the in-phase value (or I component) of the beamforming weight. Q indicates the quadrature value (or Q component) of the beamforming weight. For example, the A value may be set based on the linear scale according to Equation 7 described above. For example, the A value may be set based on the dB scale according to Equation 8 described above. As an example, when 'maximum_weight_level' is 0 dB and the bit width indicated based on 'bfwIqWidth' is 8 bits, the range of the in-phase value and the quadrature value of the beamforming weight may be set as in the following equation.

[Equation 10]

$$-1.0 \ (0x80) \le (I \text{ or } Q) \le 0.9922 \ (0x7F),$$

Referring to Equation 10, -1.0 may be represented in 8-bit as '1000000(=0x80)'. 0.9922 may be represented in 8-bit as '01111111(=0x7F)'.

In equation 10, a first bit (e.g., the most significant bit (=1)) of '1000000(=0x80)' to represent -1 may indicate a sign (e.g., '-(minus)'). Remaining bits except the first bit of '1000000(=0x80)' may indicate a fractional part.

In equation 10, a first bit (e.g., the most significant bit (=0)) of '01111111 (=0x7F)' to represent 0.9922 may indicate a sign (e.g., '+(plus)'). Remaining bits except the first bit of '01111111 (=0x7F)' may indicate a fractional part.

As an example, when 'maximum_weight_level' is 6 dB and the bit width indicated based on 'bfwIqWidth' is 8 bits, the range of the in-phase value and the quadrature value of the beamforming weight may be set as in the following equation.

[Equation 11]

$$-2.0 \ (0x80) \le (I \text{ or } Q) \le 1.9844 \ (0x7F),$$

Referring to Equation 11, -2.0 may be represented in 8-bit as '1000000(=0x80)'. 1.9844 may be represented in 8-bit as '01111111(=0x7F)'.

In equation 11, a first bit (e.g., the most significant bit (=1)) of '1000000(=0x80)' to represent -2 may indicate a sign (e.g., '-(minus)'). A second bit (e.g., the second significant bit (=0)) of '1000000(=0x80)' may indicate an integer part. Remaining bits of '1000000(=0x80)' may indicate a fractional part.

In equation 11, a first bit (e.g., the most significant bit (=0)) of '01111111 (=0x7F)' to represent 1.9844 may indicate a sign (e.g., '+(plus)'). A second bit (e.g., the second significant bit (=1)) of '01111111(=0x7F)' may indicate an integer part. Remaining bits of '01111111 (=0x7F)' may indicate a fractional part.

As the above-described example, when 'maximum_weight_level' (linear-scale) is 1.0 or 'maximum_weight_level' (dB-scale) is 0 dB, the embodiment according to the above-described equation 4 may be applied. For example, the DU 510 (or the RU 520) may identify that the maximum value of the power of the beamforming weights is set to 1.0, in a case that 'maximum_weight_level' (linear-scale) is 1.0 or 'maximum_weight_level' (dB-scale) is 0 dB.

In the above-described embodiment, an example in which 'maximum_weight_level' is set (or defined) based on the dB scale has been described, but is not limited thereto. 'maximum_weight_level' may be set (or defined) based on a decibel milliwatt (dBm) or a decibel Full scale (dBFS).

According to an embodiment, a parameter including (or indicating) a bit scale value for indicating the A value according to equation 6 may be transmitted via an M-plane message and/or a C-plane message. For example, the DU 510 may transmit the parameter to the RU 520 via an M-plane message. For example, the DU 510 may transmit the parameter to the RU 520 via a C-plane message. As an example, the parameter may be included in section extension information (e.g., Section Extension) of the C-plane message. As an example, the parameter may be included in section information (e.g., Section) of the C-plane message.

For example, a value for limiting the power of the beamforming weight may be set using 'maximum_weight_offset'. 'maximum_weight_offset' may indicate a bit-scale of the maximum power that the beamforming weight can have. A range of the size of the beamforming weight represented by 'maximum_weight_offset' may be set as in the following equation.

[Equation 12]

$$|w|^2 \le 2^{\mathbf{maximum\_weight\_offset}}$$

The DU 510 (or the RU 520) may generate (or identify) an in-phase value (or I-component) and a quadrature value (or Q-component) of the beamforming weight based on a value (i.e., A) for limiting the power of the beamforming weight through the above-described condition, and transmit the in-phase value and the quadrature value. The range of the in-phase value and the quadrature value of the beamforming weight may be set as in the following equation.

[Equation 13]

$$-\sqrt{A} \le (\text{I or Q}) < \sqrt{A}, \qquad \text{where } A = 2^{\mathbf{maximum\_weight\_offset}}$$

For example, when 'maximum_weight_offset' is 0 bit and a bit width indicated based on 'bfwIqWidth' is 8 bit, the range of the in-phase value and the quadrature value of the beamforming weight may be set as in the following equation.

[Equation 14]

$$-1.0 \ (0x80) \le (\text{I or Q}) \le 0.9922 \ (0x7F),$$

Referring to Equation 14, -1.0 may be represented in 8-bit as '1000000(=0x80)'. 0.9922 may be represented in 8-bit as '01111111(=0x7F)'.
In equation 14, a first bit (e.g., the most significant bit (=1)) of '1000000(=0x80)' to represent -1 may indicate a sign (e.g., '-(minus)'). Remaining bits except the first bit of '1000000(=0x80)' may indicate a fractional part.
In equation 14, a first bit (e.g., the most significant bit (=0)) of '01111111 (=0x7F)' to represent 0.9922 may indicate a sign (e.g., '+(plus)'). Remaining bits except the first bit of '01111111 (=0x7F)' may indicate a fractional part.
For example, when 'maximum_weight_offset' is 2 bits and a bit width indicated based on 'bfwIqWidth' is 8 bits, a range of the in-phase value and the quadrature value of the beamforming weight may be set as in the following equation.

[Equation 15]

$$-2.0 \ (0x80) \le (\text{I or Q}) \le 1.9844 \ (0x7F),$$

-2.0 may be represented in 8-bit as '1000000(=0x80)'. 1.9844 may be represented in 8-bit as '01111111(=0x7F)'.
In equation 15, a first bit (e.g., the most significant bit (=1)) of '1000000(=0x80)' to represent -2 may indicate a sign (e.g., '-(minus)'). A second bit (e.g., the second significant bit (=0)) of '1000000(=0x80)' may indicate an integer part. Remaining bits of '1000000(=0x80)' may indicate a fractional part.
In equation 15, a first bit (e.g., the most significant bit (=0)) of '01111111(=0x7F)' to represent 1.9844 may indicate a sign (e.g., '+(plus)'). A second bit (e.g., the second significant bit (=1)) of '01111111(=0x7F)' may indicate an integer part. Remaining bits of '01111111 (=0x7F)' may indicate a fractional part.
As the above-described example, when 'maximum_weight _offset' is 0 bit, the embodiment according to Equation 4 described above may be applied. For example, the DU 510 (or the RU 520) may identify that a maximum value of the power of the beamforming weights is set to 1.0, in a case that 'maximum_weight_offset' is 0 bit.
In the above-described embodiments, an example in which a parameter corresponding directly to the value A or an exponent parameter of a power of A is signaled have been described, but the embodiments of the present disclosure are not limited thereto. If it is signaling (e.g., M-plane message, C-plane message) of a parameter for increasing an upper limit of weight power (e.g., a separate indicator, a parameter for calculating the upper limit, and the like), it may be understood as an embodiment of the present disclosure.

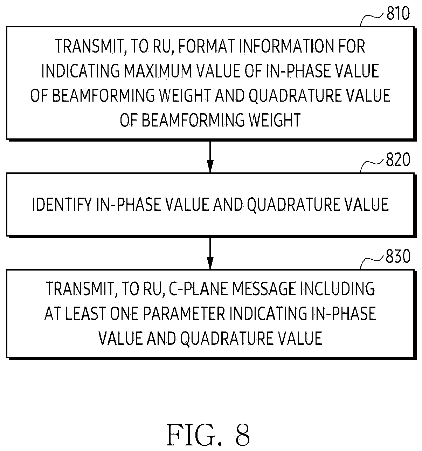

FIG. 8 is a flowchart illustrating an operation of a DU.
Referring to FIG. 8, in operation 810, the DU 510 (e.g., a processor of the DU 510) may transmit, to the RU 520, format information for indicating a maximum value of an in-phase value of a beamforming weight and a quadrature value of the beamforming weight. For example, the format information may be transmitted in an M-plane message and a C-plane message.

For example, the DU 510 may determine a format for indicating the maximum value of the in-phase value and the quadrature value, based on exchanging the M-plane message with the RU 520.

For example, the format information may be set to indicate one of a first format and a second format. The first format and the second format may be related to the maximum value of the in-phase value and the quadrature value of the beamforming weight. As an example, the maximum value of the in-phase value and the quadrature value (or a maximum value of the beamforming weight) may be set to be greater than 1, based on the format information indicating the first format. The maximum value of the in-phase value and the quadrature value (or the maximum value of the beamforming weight) may be set to be less than or equal to 1, based on the format information indicating the second format. According to an embodiment, the maximum value of the in-phase value and the quadrature value (or the maximum value of the beamforming weight) may be set to 1, based on the format information indicating the second format.

For example, the format information may be configured with 1 bit. Based on the value of the format information of 1 bit being a first value (e.g., 0), the maximum value of the in-phase value and the quadrature value may be set based on the first format. Based on the value of the format information of 1 bit being a second value (e.g., 1), the maximum value of the in-phase value and the quadrature value may be set based on the second format.

For example, the DU 510 may set the maximum value to be greater than 1. The DU 510 may set the format for indicating the maximum value as the first format. As an example, the DU 510 may transmit format information including the maximum value to the RU 520.

For example, the DU 510 may set a parameter value (e.g. 'maximum_weight_level' or 'maximum_weight_offset') to indicate a range for setting the weight. The parameter value for indicating a range for setting the weight may be an example of format information.

As an example, a parameter value for indicating a range for setting a weight may be used to indicate a maximum value of the weight. The parameter value for indicating a range for setting a weight may include a value by which a maximum value of an in-phase value and a quadrature value (or a maximum value of a beamforming weight) may be set to be greater than 1, or a maximum value by which the maximum value of the in-phase value and the quadrature value (or the maximum value of the beamforming weight) may be set to be less than or equal to 1. The DU 510 may transmit, to the RU 520, a parameter value for indicating a range for setting a weight. The RU 520 may receive the parameter value. The RU 520 may use the parameter value to identify the beamforming weight.

In operation 820, the DU 510 may identify the in-phase value and the quadrature value. For example, the DU 510 may identify the in-phase value and the quadrature value, based on a range determined by a maximum value. For example, the DU 510 may identify the range of the in-phase value and the quadrature value, based on the maximum value of the in-phase value and the quadrature value identified according to operation 810. The DU 510 may identify the in-phase value and the quadrature value, based on the range of the in-phase value and the quadrature value. The DU 510 may identify the beamforming weight by identifying the in-phase value and the quadrature value.

In operation 830, the DU 510 may transmit, to the RU 520, a C-plane message including at least one parameter indicating the in-phase value and the quadrature value.

For example, the DU 510 may identify (or generate) at least one parameter indicating an in-phase value and a quadrature value. The DU 510 may identify the number of bits for each of the at least one parameter. The DU 510 may identify the number of bits for a first parameter for representing the in-phase value and a second parameter for representing the quadrature value, as the second parameter. As an example, the number of bits for the first parameter may be set to 8. The number of bits for the second parameter may be set to 8.

The DU 510 may identify at least one parameter indicating the in-phase value and the quadrature value, based on the number of identified bits. Based on the format information and the number of bits, the DU 510 may divide bits for each of the at least one parameter into a first bit for indicating a sign, at least one second bit for indicating an integer part, and at least one third bit for indicating a fractional part.

For example, in a case that the number of bits for the first parameter for indicating the in-phase value of the beamforming weight is 8, 1 bit of the 8 bits may be used to indicate the sign. 1 bit of the 8 bits may be used to indicate the integer part. 6 bits of the 8 bits may be used to indicate the fractional part.

The DU 510 may identify (or generate) the parameter indicating the in-phase value (or quadrature value) of a beamforming weight, based on the first bit, the at least one second bit, and the at least one third bit.

For example, the DU 510 may transmit information about beamforming weight to the RU 520 via a C-plane message. The information about beamforming weight may include at least one parameter indicating an in-phase value and a quadrature value of the beamforming weight. The information about beamforming weight may include information indicating the number of bits for each of the at least one parameter.

Information indicating at least one parameter and/or the number of bits for each of the at least one parameter may be included in section extension information. As an example, information indicating at least one parameter and/or the number of bits for each of the at least one parameter may be included in at least one field related to one of a section extension type 1, a section extension type 11, and a section extension type 19.

An example of information for indicating the number of bits for each of the at least one parameter is the 'bfwIqWidth' described above. An example of the at least one parameter is 'bfwI' and 'bfwQ'. 'bfwI' indicates an in-phase value of the beamforming weight. 'bfwQ' indicates a quadrature value of the beamforming weight. 'bfwIqWidth' may be set to 4 bits. Based on a value of 'bfwIqWidth', the number of bits for each of 'bfwI' and 'bfwQ' may be set. For example, in a case that the value of 'bfwIqWidth' is set to '0000', the number of bits for 'bfwI' may be set to 16. In a case that the value of 'bfwIqWidth' is set to '0000', the number of bits for 'bfwQ' may be set to 16. For example, in a case that the value of 'bfwIqWidth' is set to '1100', the number of bits for 'bfwI' may be set to 12. In a case that the value of 'bfwIqWidth' is set to '1100', the number of bits for 'bfwQ' may be set to 12.

According to an embodiment, some of operations 810 to 830 described above may be omitted. According to an embodiment, another operation may be added between operations 810 to 830 described above. According to an embodiment, at least some of operations 810 to 830 may be performed simultaneously. According to an embodiment, the order of operations 810 to 830 may be changed.

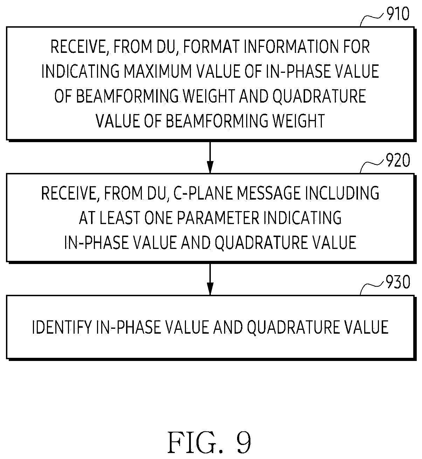

FIG. 9 is a flowchart illustrating an operation of an RU.

Referring to FIG. 9, in operation 910, the RU 520 (e.g., a processor of the RU 520) may receive format information for indicating a maximum value of an in-phase value of a beamforming weight and a quadrature value of the beamforming weight from the DU 510. For example, the format information may be transmitted in an M-plane message and a C-plane message.

For example, the RU 520 may determine a format for indicating the maximum value of the in-phase value and the quadrature value, based on exchanging the M-plane message with the DU 510.

For example, the format information may be set to indicate one of a first format and a second format. The first format and the second format may be related to the maximum value of the in-phase value and the quadrature value of the beamforming weight. As an example, the maximum value of the in-phase value and the quadrature value (or the maximum value of the beamforming weight) may be set to be greater than 1, based on the format information indicating the first format. The maximum value of the in-phase value and the quadrature value (or the maximum value of the beamforming weight) may be set to be less than or equal to 1, based on the format information indicating the second format. According to an embodiment, the maximum value of the in-phase value and the quadrature value (or the maximum value of the beamforming weight) may be set to 1, based on the format information indicating the second format.

For example, the format information may be configured with 1 bit. Based on a value of the format information of 1 bit being a first value (e.g., 0), the maximum value of the in-phase value and the quadrature value may be set based on the first format. Based on a value of the format information of 1 bit being a second value (e.g., 1), the maximum value of the in-phase value and the quadrature value may be set based on the second format.

For example, the maximum value of the in-phase value and the quadrature value may be set to be greater than 1. The format for indicating the maximum value may be set as the first format. The RU 520 may identify that the format for indicating the maximum value is set as the first format, based on the format information. As an example, the RU 520 may receive the format information including the maximum value from the DU 510.

For example, the RU 520 may identify the maximum value of the in-phase value and the quadrature value. The RU 520 may identify a range of the in-phase value and the quadrature value, based on the maximum value of the in-phase value and the quadrature value.

In operation 920, the RU 520 may receive, from the DU 510, a C-plane message including at least one parameter indicating the in-phase value and the quadrature value.

For example, the RU 520 may receive information about the beamforming weight from the DU 510 via a C-plane message. The information about the beamforming weight may include at least one parameter indicating the in-phase value and the quadrature value of the beamforming weight. The information about the beamforming weight may include information indicating the number of bits for each of at least one parameter.

For example, information indicating at least one parameter and/or the number of bits for each of the at least one parameter may be included in section extension information of a C-plane message. As an example, information indicating at least one parameter and/or the number of bits for each of the at least one parameter may be included in at least one field related to one of a section extension type 1, a section extension type 11, and a section extension type 19.

For example, the RU 520 may identify information for indicating the number of bits for each of at least one parameter, based on the C-plane message. An example of the information for indicating the number of bits for each of the at least one parameter is the 'bfwIqWidth' described above. The RU 520 may identify at least one parameter based on the C-plane message. An example of the at least one parameter is 'bfwI' and 'bfwQ'. 'bfwI' indicates the in-phase value of the beamforming weight. 'bfwQ' indicates the quadrature value of the beamforming weight. For example, 'bfwIqWidth' may be set to 4 bits.

Based on the value of 'bfwIqWidth', the RU 520 may identify the number of bits for 'bfwI' and 'bfwQ' respectively. For example, the RU 520 may identify the number of bits for 'bfwI' as 16, based on identifying that the value of 'bfwIqWidth' is set to '0000'. The RU 520 may identify the number of bits for 'bfwQ' as 16, based on identifying that the value of

'bfwIqWidth' is set to '0000'. For example, the RU 520 may identify the number of bits for 'bfwI' as 12, based on identifying that the value of 'bfwIqWidth' is set to '1100'. The RU 520 may identify the number of bits for 'bfwQ' as 12, based on identifying that the value of 'bfwIqWidth' is set to '1100'.

In operation 930, the RU 520 may identify the in-phase value and the quadrature value. For example, the RU 520 may identify the in-phase value and the quadrature value, based on the format information and the at least one parameter. The RU 520 may identify the beamforming weight, based on identifying the in-phase value and the quadrature value.

For example, the RU 520 may identify at least one parameter indicating the in-phase value and the quadrature value, based on the number of identified bits. Based on the format information and the number of bits, the RU 520 may identify a first bit for indicating a sign, at least one second bit for indicating an integer part, and at least one third bit for indicating a fractional part, from among the bits for each of the at least one parameter. As an example, in a case that the number of bits for a first parameter indicating the in-phase value of the beamforming weight is 8, the RU 520 may identify 1 bit of the 8 bits as the first bit for indicating a sign. The RU 520 may identify 1 bit of the 8 bits as the at least one second bit for indicating the integer part. The RU 520 may identify 6 of the 8 bits as the at least one third bit for indicating the fractional part.

The RU 520 may identify the in-phase value (or the quadrature value) of the beamforming weight, based on the first bit, the at least one second bit, and the at least one third bit.

According to an embodiment, some of operations 910 to 930 described above may be omitted. According to an embodiment, another operation may be added between operations 910 to 930 described above. According to an embodiment, at least some of operations 910 to 930 may be performed simultaneously. According to an embodiment, the order of operations 910 to 930 may be changed.

According to the above-described embodiment, when generating and transmitting a beamforming weight, a maximum power value of the beamforming weight may be specified. An in-phase value and a quadrature value of the beamforming weight identified based on the maximum power value of the beamforming weight may be represented in fixed-point.

According to an embodiment, the RU 520 may perform beamforming. For example, a beamforming weight may be pre-defined, and the pre-defined beamforming weight may be used in the RU 520. For example, the beamforming weight may be pre-defined, and the pre-defined beamforming weight may be transmitted from the DU 510 to the RU 520. For example, the DU 510 may generate a beamforming weight in real time. The DU 510 may transmit the generated beamforming weight to the RU 520. For example, a beamforming weight may be generated in real time, based on channel information obtained from the RU 520. For example, the DU 510 may generate a beamforming weight based on channel information obtained from the RU 520 and transmit the generated beamforming weight to the RU 520. For example, the RU 520 may generate a beamforming weight, based on the obtained channel information.

According to an embodiment, all beamforming weights used in the RU 520 may be set to have power less than or equal to 1.0. In a case that all beamforming weights have power less than or equal to 1.0, when normalization is performed per each layer (or antenna, RB), the power of all beamforming weights becomes less than 1.0. Therefore, since the beamforming weight acts as a loss for a signal size in a case that the beamforming is performed, power of signal output may not reach a maximum value. According to an embodiment, a condition for the maximum power (or size) of the beamforming weight may be removed (or relaxed). When the beamforming weight is normalized, the power of the signal output may increase. Accordingly, the power of the signal output may reach the maximum value.

According to an embodiment, when the DU 510 (or the RU 520) generates or transmits (or transfers) a beamforming weight value, the DU 510 (or the RU 520) may identify an in-phase value and a quadrature value of a beamforming weight, based on an integer part and a fractional part of a fixed-point. According to an embodiment, the DU 510 (or the RU 520) may identify the in-phase value and the quadrature value of the beamforming weight, based on an exponent part and a mantissa part of a floating-point.

According to an embodiment, the maximum value of the size (or level) of the beamforming weight may be set to be greater than 1.

According to an embodiment, flexibility with respect to the power of the beamforming weight during normalization of the beamforming weight is provided, so a signal may be outputted at a maximum power when beamforming.

The effects that can be obtained from the present disclosure are not limited to those described above, and any other effects not mentioned herein will be clearly understood by those having ordinary knowledge in the art to which the present disclosure belongs, from the following description.

According to an embodiment, a method performed by a distributed unit (DU) may comprise transmitting, to a radio unit (RU), format information for indicating a maximum value of an in-phase value of a beamforming weight and a quadrature value of the beamforming weight. The method may comprise, based on a range determined according to the maximum value, identifying the in-phase value and the quadrature value. The method may comprise transmitting, to the RU, a control-plane (C-plane) message including at least one parameter indicating the in-phase value and the quadrature value.

According to an embodiment, the maximum value may be set to be greater than 1.

According to an embodiment, the at least one parameter indicating the in-phase value and the quadrature value may be included in at least one field related to a section extension type 1 of the C-plane message.

According to an embodiment, the method may comprise identifying the number of bits for each of the at least one parameter. The method may further comprise identifying, based on the number of bits, the at least one parameter indicating the in-phase value and the quadrature value. The C-plane message may include information for indicating the number of bits.

According to an embodiment, the format information may include a parameter value for indicating a maximum value of the in-phase value of the beamforming weight and the quadrature value of the beamforming weight.

According to an embodiment, the format information may be set to indicate one of a first format and a second format. The maximum value may be set to be greater than 1, based on the format information indicating the first format. The maximum value may be set to be less than or equal to 1, based on the format information indicating the second format.

According to an embodiment, the format information may be transmitted in at least one of a management-plane(M-plane) message and another C-plane message.

According to an embodiment, a method performed by a radio unit (RU) may comprise receiving, from a distributed unit (DU), format information for indicating a maximum value of an in-phase value of a beamforming weight and a quadrature value of the beamforming weight. The method may comprise receiving, from the DU, a control-plane (C-plane) message including at least one parameter indicating the in-phase value and the quadrature value. The method may comprise, based on the format information and the at least one parameter, identifying the in-phase value and the quadrature value.

According to an embodiment, the maximum value may be set to be greater than 1.

According to an embodiment, the at least one parameter indicating the in-phase value and the quadrature value may be included in at least one field related to a section extension type 1 of the C-plane message.

According to an embodiment, the C-plane message may include information for indicating the number of bits for each of the at least one parameter. The method may comprise, based on the format information and the number of bits, identifying, from among the bits for each of the at least one parameter, a first bit for representing a sign, at least one second bit for representing an integer part, and at least one third bit for representing a fractional part. The method may comprise, based on the first bit, the at least one second bit, and the at least one third bit, identifying the in-phase value and the quadrature value.

According to an embodiment, the format information may include a parameter value for indicating a maximum value of the in-phase value of the beamforming weight and the quadrature value of the beamforming weight.

According to an embodiment, the format information may be set to indicate one of the first format and the second format. The method may comprise identifying that the maximum value is set to be greater than 1, based on identifying that the format information indicates the first format. The method may comprise identifying that the maximum value is set to be less than or equal to 1, based on identifying that the format information indicates the second format.

According to an embodiment, the format information may be transmitted in at least one of a management-plane(M-plane) message and another C-plane message.

According to an embodiment, an electronic device performed by a distributed unit (DU) may comprise at least one transceiver including a fronthaul transceiver, and at least one processor coupled to the at least one transceiver. The processor may be configured to transmit, to a radio unit (RU), format information for indicating a maximum value of an in-phase value of a beamforming weight and a quadrature value of the beamforming weight. The processor may be configured to, based on a range determined according to the maximum value, identify the in-phase value and the quadrature value. The processor may be configured to transmit, to the RU, a control-plane (C-plane) message including at least one parameter indicating the in-phase value and the quadrature value.

According to an embodiment, the maximum value may be set to be greater than 1.

According to an embodiment, the at least one parameter indicating the in-phase value and the quadrature value may be included in at least one field related to a section extension type 1 of the C-plane message.

According to an embodiment, the processor may be configured to identify the number of bits for each of the at least one parameter. The processor may be configured to identify, based on the number of bits, the at least one parameter indicating the in-phase value and the quadrature value. The C-plane message may include information for indicating the number of bits.

According to an embodiment, the format information may include a parameter value for indicating a maximum value of the in-phase value of the beamforming weight and the quadrature value of the beamforming weight.

According to an embodiment, the format information may be set to indicate one of a first format and a second format. The maximum value may be set to be greater than 1, based on the format information indicating the first format. The maximum value may be set to be less than or equal to 1, based on the format information indicating the second format.

According to an embodiment, the format information may be transmitted in at least one of a management-plane(M-plane) message and another C-plane message.

According to an embodiment, an electronic device performed by a radio unit (RU) may comprise at least one transceiver including a fronthaul transceiver, and at least one processor coupled to the at least one transceiver. The processor may be configured to receive, from a distributed unit (DU), format information for indicating a maximum value of an in-phase value of a beamforming weight and a quadrature value of the beamforming weight. The processor may be configured to receive, from the DU, a control-plane (C-plane) message including at least one parameter indicating the in-phase value and the quadrature value. The processor may be configured to, based on the format information and the at least one parameter, identify the in-phase value and the quadrature value.

According to an embodiment, the maximum value may be set to be greater than 1.

According to an embodiment, the at least one parameter indicating the in-phase value and the quadrature value may be included in at least one field related to a section extension type 1 of the C-plane message.

According to an embodiment, the C-plane message may include information for indicating the number of bits for each of the at least one parameter. The processor may be configured to, based on the format information and the number of bits, identify, from among the bits for each of the at least one parameter, a first bit for representing a sign, at least one second bit for representing an integer part, and at least one third bit for representing a fractional part. The processor may be configured to, based on the first bit, the at least one second bit, and the at least one third bit, identify the in-phase value and the quadrature value.

According to an embodiment, the format information may include a parameter value for indicating a maximum value of the in-phase value of the beamforming weight and the quadrature value of the beamforming weight.

According to an embodiment, the format information may be set to indicate one of the first format and the second format. The processor may be configured to identify that the maximum value is set to be greater than 1, based on identifying that the format information indicates the first format. The processor may be configured to identify that the maximum value is set to be less than or equal to 1, based on identifying that the format information indicates the second format.

According to an embodiment, the format information may be transmitted in at least one of a management-plane(M-plane) message and another C-plane message.

According to an embodiment, an electronic device performed by a distributed unit (DU) is provided. The electronic device may comprise memory storing instructions, at least one transceiver including a fronthaul transceiver, and at least one processor. The instructions, when executed by the at least one processor, may cause the DU to transmit, to a radio unit (RU), through the at least one transceiver, format information for indicating a maximum value of an in-phase value of a beamforming weight and a quadrature value of the beamforming weight, based on a range determined according to the maximum value, identify the in-phase value and the quadrature value, and transmit, to the RU, through the at least one transceiver, a control-plane (C-plane) message including at least one parameter indicating the in-phase value and the quadrature value.

According to an embodiment, an electronic device performed by a radio unit (RU) is provided. The electronic device may comprise memory storing instructions, at least one transceiver including a fronthaul transceiver, and at least one processor. The instructions, when executed by the at least one processor, may cause the DU to receive, from a distributed unit (DU), through the at least one transceiver, format information for indicating a maximum value of an in-phase value of a beamforming weight and a quadrature value of the beamforming weight, receive, from the DU, through the at least one transceiver, a control-plane (C-plane) message including at least one parameter indicating the in-phase value and the quadrature value, and based on the format information and the at least one parameter, identify the in-phase value and the quadrature value.

According to an embodiment, a non-transitory computer-readable storage medium is provided. The non-transitory computer-readable storage medium may comprise memory storing instructions. The instructions, when executed by at least one processor, may cause a distributed unit (DU) to transmit, to a radio unit (RU), format information for indicating a maximum value of an in-phase value of a beamforming weight and a quadrature value of the beamforming weight, based on a range determined according to the maximum value, identify the in-phase value and the quadrature value, and transmit, to the RU, a control-plane (C-plane) message including at least one parameter indicating the in-phase value and the quadrature value.

According to an embodiment, a non-transitory computer-readable storage medium is provided. The non-transitory computer-readable storage medium may comprise memory storing instructions. The instructions, when executed by at least one processor, may cause a radio unit (RU) to receive, from a distributed unit (DU), format information for indicating a maximum value of an in-phase value of a beamforming weight and a quadrature value of the beamforming weight, receive, from the DU, a control-plane (C-plane) message including at least one parameter indicating the in-phase value and the quadrature value, and based on the format information and the at least one parameter, identify the in-phase value and the quadrature value.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. A method performed by a distributed unit (DU), comprising:

   transmitting, to a radio unit (RU), format information for indicating a maximum value of an in-phase value of a beamforming weight and a quadrature value of the beamforming weight,
   based on a range determined according to the maximum value, identifying the in-phase value and the quadrature value, and
   transmitting, to the RU, a control-plane (C-plane) message including at least one parameter indicating the in-phase value and the quadrature value.

2. The method of claim 1, wherein the at least one parameter indicating the in-phase value and the quadrature value is included in at least one field related to a section extension type 1 of the C-plane message.

3. The method of claim 1, wherein the method further comprises:

identifying the number of bits for each of the at least one parameter, and
identifying, based on the number of bits, the at least one parameter indicating the in-phase value and the quadrature value, and
wherein the C-plane message further includes information for indicating the number of bits.

4. The method of claim 1, wherein the format information includes a parameter value for indicating the maximum value of the in-phase value of the beamforming weight and the quadrature value of the beamforming weight.

5. The method of claim 1, wherein the format information is transmitted in at least one of a management-plane(M-plane) message and another C-plane message.

6. A method performed by a radio unit (RU), comprising:

receiving, from a distributed unit (DU), format information for indicating a maximum value of an in-phase value of a beamforming weight and a quadrature value of the beamforming weight,
receiving, from the DU, a control-plane (C-plane) message including at least one parameter indicating the in-phase value and the quadrature value, and
based on the format information and the at least one parameter, identifying the in-phase value and the quadrature value.

7. The method of claim 6, wherein the at least one parameter indicating the in-phase value and the quadrature value is included in at least one field related to a section extension type 1 of the C-plane message.

8. The method of claim 6, wherein the C-plane message further includes information for indicating the number of bits for each of the at least one parameter, and
wherein the method further comprises:

based on the format information and the number of bits, identifying, from among the bits for each of the at least one parameter, a first bit for representing a sign, at least one second bit for representing an integer part, and at least one third bit for representing a fractional part, and
based on the first bit, the at least one second bit, and the at least one third bit, identifying the in-phase value and the quadrature value.

9. The method of claim 6, wherein the format information includes a parameter value for indicating a maximum value of the in-phase value of the beamforming weight and the quadrature value of the beamforming weight.

10. The method of claim 6, wherein the format information is transmitted in at least one of a management-plane(M-plane) message and another C-plane message.

11. An electronic device performed by a distributed unit (DU), comprising:

memory storing instructions,
at least one transceiver including a fronthaul transceiver; and
at least one processor,
wherein the instructions, when executed by the at least one processor, cause the DU to:

transmit, to a radio unit (RU), through the at least one transceiver, format information for indicating a maximum value of an in-phase value of a beamforming weight and a quadrature value of the beamforming weight,
based on a range determined according to the maximum value, identify the in-phase value and the quadrature value, and
transmit, to the RU, through the at least one transceiver, a control-plane (C-plane) message including at least one parameter indicating the in-phase value and the quadrature value.

12. The electronic device of claim 11, wherein the at least one processor is configured to perform one of the methods of claims 2 to 5.

13. An electronic device performed by a radio unit (RU), comprising:

> memory storing instructions,
> at least one transceiver including a fronthaul transceiver; and
> at least one processor,
> wherein the instructions, when executed by the at least one processor, cause the DU to:
>
> > receive, from a distributed unit (DU), through the at least one transceiver, format information for indicating a maximum value of an in-phase value of a beamforming weight and a quadrature value of the beamforming weight,
> > receive, from the DU, through the at least one transceiver, a control-plane (C-plane) message including at least one parameter indicating the in-phase value and the quadrature value, and
> > based on the format information and the at least one parameter, identify the in-phase value and the quadrature value.

14. The electronic device of claim 13, wherein the at least one processor is configured to perform one of the methods of claims 7 to 10.

15. A non-transitory computer readable storage media comprising

> memory storing instructions,
> wherein the instructions, when executed by at least one processor, cause a distributed unit (DU) to perform one of the methods of claims 1 to 5 or cause a radio unit (RU) to perform one of the methods of claims 6 to 10.

FIG. 1

110

210    215    220

DU ——— RU

FIG. 2A

110

251

eNB/gNB

O-DU

LLS-C ⌇ ⌐LLS-U

LLS-C ⌇ ⌐LLS-U

O-RU  ...  O-RU

253-1  253-n

FIG. 2B

FIG. 3A

220

RU

360

RF
TRANSCEIVER

365

FRONTHAUL
TRANSCEIVER

370

MEMORY

380

PROCESSOR

FIG. 3B

FIG. 4

~510

DU

~520

RU

~531

IDENTIFY INFORMATION ABOUT
BEAMFORMING WEIGHT

INFORMATION ABOUT
BEAMFORMING WEIGHT

~532

~533

IDENTIFY BEAMFORMING WEIGHT

~534

TRANSMIT SIGNAL BASED ON
BEAMFORMING WEIGHT

FIG. 5

DU (510)

~611

M-PLANE MESSAGE
PROCESSING UNIT

~612

BEAMFORMING WEIGHT
CALCULATION UNIT

~613

C-PLANE MESSAGE
GENERATION UNIT

RU (520)

~621

M-PLANE MESSAGE
PROCESSING UNIT

~622

C-PLANE MESSAGE
GENERATION UNIT

FIG. 6A

510

DU

661

GENERATE
M-PLANE MESSAGE

M-PLANE MESSAGE

520

RU

671

GENERATE M-PLANE
MESSAGE

662

CALCULATE
BEAMFORMING WEIGHT

663

M-PLANE MESSAGE
FOR
BEAMFORMING WEIGHT

M-PLANE MESSAGE
INCLUDING
BEAMFORMING WEIGHT

672

PROCESS
M-PLANE MESSAGE

664

CALCULATE REAL-TIME
BEAMFORMING WEIGHT

665

GENERATE C-PLANE
MESSAGE FOR
BEAMFORMING WEIGHT

C-PLANE MESSAGE
INCLUDING
BEAMFORMING WEIGHT

673

PROCESS
C-PLANE MESSAGE

FIG. 6B

700

| 0 (msb) | 1 | 2 | 3 | 4 | 5 | 6 | 7 (1sb) | # of bytes | |
|---|---|---|---|---|---|---|---|---|---|
| Section Type 1 : DL/UL control msgs | | | | | | | | | |
| transport header, see clause 5.1.3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | | startSymbolId | | | | | 1 | Octet 12 |
| numberOfsections | | | | | | | | 1 | Octet 13 |
| sectionType = 1 | | | | | | | | 1 | Octet 14 |
| udCompHdr | | | | | | | | 1 | Octet 15 |
| reserved | | | | | | | | 1 | Octet 16 |
| sectionId | | | | | | | | 1 | Octet 17 |
| sectionId | | | rb | symInc | startPrbc | | | 1 | Octet 18 |
| startPrbc | | | | | | | | 1 | Octet 19 |
| numPrbc | | | | | | | | 1 | Octet 20 |
| reMask[11:4] | | | | | | | | 1 | Octet 21 |
| reMask[3:0] | | | | numSymbol | | | | 1 | Octet 22 |
| ef = 1 | beamId[14:8] | | | | | | | 1 | Octet 23 |
| beamId[7:0] | | | | | | | | 1 | Octet 24 |
| Section Extensions indicated by "ef" | | | | | | | | var | Octet 25 |
| . . . | | | | | | | | | |
| sectionId | | | | | | | | 1 | Octet N |
| sectionId | | | rb | symInc | startPrbc | | | 1 | N+1 |
| startPrbc | | | | | | | | 1 | N+2 |
| numPrbc | | | | | | | | 1 | N+3 |
| reMask[11:4] | | | | | | | | 1 | N+4 |
| reMask[3:0] | | | | numSymbol | | | | 1 | N+5 |
| ef = 0 | beamId[14:8] | | | | | | | 1 | N+6 |
| beamId[7:0] | | | | | | | | 1 | N+7 |
| Section Extensions as indicated by "ef" | | | | | | | | var | N+8 |

710
720
730

FIG. 7

38

FIG. 8

~910

RECEIVE, FROM DU, FORMAT INFORMATION FOR
INDICATING MAXIMUM VALUE OF IN-PHASE VALUE
OF BEAMFORMING WEIGHT AND QUADRATURE
VALUE OF BEAMFORMING WEIGHT

~920

RECEIVE, FROM DU, C-PLANE MESSAGE INCLUDING
AT LEAST ONE PARAMETER INDICATING
IN-PHASE VALUE AND QUADRATURE VALUE

~930

IDENTIFY IN-PHASE VALUE AND QUADRATURE VALUE

FIG. 9

## INTERNATIONAL SEARCH REPORT

| International application No. |
|---|
| **PCT/KR2023/019173** |

| A. | CLASSIFICATION OF SUBJECT MATTER |
|---|---|

**H04B 7/06**(2006.01)i; **H04W 88/08**(2009.01)i; **H04W 92/20**(2009.01)i; **H04W 52/36**(2009.01)i

According to International Patent Classification (IPC) or to both national classification and IPC

| B. | FIELDS SEARCHED |
|---|---|

Minimum documentation searched (classification system followed by classification symbols)

H04B 7/06(2006.01); H01Q 25/00(2006.01); H04B 7/0456(2017.01); H04L 12/761(2013.01); H04L 29/06(2006.01); H04W 16/18(2009.01); H04W 28/06(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔포밍 웨이트(beamforming weight), 동-위상(in-phase), 직교-위상(quadrature-phase), 최대값(maximum value), C-plane 메시지(control-plane message)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 11043998 B2 (MAVENIR NETWORKS, INC.) 22 June 2021 (2021-06-22)<br>See column 15, lines 4-13; and claims 1, 4 and 18. | 1-15 |
| Y | WO 2022-005709 A1 (QUALCOMM INCORPORATED) 06 January 2022 (2022-01-06)<br>See claim 1. | 1-15 |
| A | US 2019-0289497 A1 (MAVENIR NETWORKS, INC.) 19 September 2019 (2019-09-19)<br>See paragraphs [0081]-[0086]; claim 1; and figure 1. | 1-15 |
| A | US 2022-0078631 A1 (COMMSCOPE TECHNOLOGIES LLC) 10 March 2022 (2022-03-10)<br>See paragraphs [0029]-[0031]; claim 1; and figures 3-4. | 1-15 |
| A | KR 10-2179822 B1 (LG ELECTRONICS INC.) 17 November 2020 (2020-11-17)<br>See paragraphs [0144]-[0147]; claim 1; and figure 17. | 1-15 |

☐ Further documents are listed in the continuation of Box C.  ☑ See patent family annex.

| | Special categories of cited documents: | |
|---|---|---|
| * | | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **04 March 2024** | **04 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/019173**

| Patent document cited in search report | | | Publication date (day/month/year) | Patent family member(s) | | | Publication date (day/month/year) |
|---|---|---|---|---|---|---|---|
| US | 11043998 | B2 | 22 June 2021 | EP | 3836420 | A1 | 16 June 2021 |
| | | | | US | 11323166 | B2 | 03 May 2022 |
| | | | | US | 2021-0135722 | A1 | 06 May 2021 |
| | | | | US | 2021-0273704 | A1 | 02 September 2021 |
| WO | 2022-005709 | A1 | 06 January 2022 | CN | 115735379 | A | 03 March 2023 |
| | | | | EP | 4173359 | A1 | 03 May 2023 |
| | | | | KR | 10-2023-0029664 | A | 03 March 2023 |
| | | | | US | 2023-0180055 | A1 | 08 June 2023 |
| US | 2019-0289497 | A1 | 19 September 2019 | EP | 3769582 | A1 | 27 January 2021 |
| | | | | EP | 3769582 | A4 | 16 March 2022 |
| | | | | US | 11159982 | B2 | 26 October 2021 |
| | | | | US | 11812302 | B2 | 07 November 2023 |
| | | | | US | 2021-0410007 | A1 | 30 December 2021 |
| | | | | WO | 2019-183020 | A1 | 26 September 2019 |
| US | 2022-0078631 | A1 | 10 March 2022 | CN | 116076109 | A | 05 May 2023 |
| | | | | EP | 4211929 | A1 | 19 July 2023 |
| | | | | WO | 2022-055988 | A1 | 17 March 2022 |
| KR | 10-2179822 | B1 | 17 November 2020 | CN | 105308879 | A | 03 February 2016 |
| | | | | CN | 105308879 | B | 02 July 2019 |
| | | | | CN | 105340193 | A | 17 February 2016 |
| | | | | CN | 105340193 | B | 20 July 2018 |
| | | | | CN | 105432025 | A | 23 March 2016 |
| | | | | CN | 105432025 | B | 19 October 2018 |
| | | | | CN | 105432026 | A | 23 March 2016 |
| | | | | CN | 105432026 | B | 30 October 2018 |
| | | | | EP | 3014782 | A1 | 04 May 2016 |
| | | | | EP | 3014782 | A4 | 18 January 2017 |
| | | | | EP | 3014785 | A1 | 04 May 2016 |
| | | | | EP | 3014785 | A4 | 15 February 2017 |
| | | | | EP | 3014785 | B1 | 31 October 2018 |
| | | | | EP | 3028388 | A1 | 08 June 2016 |
| | | | | EP | 3028388 | B1 | 07 August 2019 |
| | | | | EP | 3028389 | A1 | 08 June 2016 |
| | | | | EP | 3028389 | B1 | 12 December 2018 |
| | | | | JP | 2016-518752 | A | 23 June 2016 |
| | | | | JP | 2016-532364 | A | 13 October 2016 |
| | | | | JP | 6195667 | B2 | 13 September 2017 |
| | | | | JP | 6466426 | B2 | 06 February 2019 |
| | | | | KR | 10-2016-0023668 | A | 03 March 2016 |
| | | | | KR | 10-2016-0024839 | A | 07 March 2016 |
| | | | | KR | 10-2016-0037133 | A | 05 April 2016 |
| | | | | KR | 10-2016-0039572 | A | 11 April 2016 |
| | | | | KR | 10-2179820 | B1 | 17 November 2020 |
| | | | | KR | 10-2179823 | B1 | 17 November 2020 |
| | | | | KR | 10-2201755 | B1 | 12 January 2021 |
| | | | | US | 10003442 | B2 | 19 June 2018 |
| | | | | US | 2016-0072572 | A1 | 10 March 2016 |
| | | | | US | 2016-0173250 | A1 | 16 June 2016 |
| | | | | US | 9525476 | B2 | 20 December 2016 |
| | | | | WO | 2014-208974 | A1 | 31 December 2014 |

Form PCT/ISA/210 (patent family annex) (July 2022)

**INTERNATIONAL SEARCH REPORT**
Information on patent family members

International application No.

**PCT/KR2023/019173**

| Patent document cited in search report | Publication date (day/month/year) | Patent family member(s) | | Publication date (day/month/year) |
|---|---|---|---|---|
| | | WO | 2014-209015 A1 | 31 December 2014 |
| | | WO | 2015-016487 A1 | 05 February 2015 |
| | | WO | 2015-016489 A1 | 05 February 2015 |

Form PCT/ISA/210 (patent family annex) (July 2022)